Europäisches Patentamt

European Patent Office

Office européen des brevets

(19)

(11) Numéro de publication : **0 503 983 A1**

(12) # DEMANDE DE BREVET EUROPEEN

(21) Numéro de dépôt : **92400116.7**

(22) Date de dépôt : **16.01.92**

(51) Int. Cl.$^5$ : **F16J 3/04**

(30) Priorité : **17.01.91 FR 9100497**

(43) Date de publication de la demande :
**16.09.92 Bulletin 92/38**

(84) Etats contractants désignés :
**DE GB IT**

(71) Demandeur : **EG ET G**
**18ter, rue des Osiers, Coignières**
**F-78310 Maurepas (Yvelines) (FR)**

(72) Inventeur : **Laville, Christian**
**4 Allée de la Bauce**
**F-91150 Etampes (FR)**
Inventeur : **Brison, Eric**
**10 Villa Artois**
**F-78410 Aubergenville (FR)**

(74) Mandataire : **Martin, Jean-Jacques et al**
**Cabinet REGIMBEAU 26, Avenue Kléber**
**F-75116 Paris (FR)**

(54) **Soufflet à ondes courbes.**

(57)  la présente invention concerne un soufflet.

Ce soufflet (1) comporte des ondes (4) identiques, présentant des flancs (7, 8) dans lesquels se localisent les déformations élastiques du soufflet et qui présentent une forme générale incurvée dans un même sens axial (18). Le soufflet (1) peut ainsi être amené dans un état de contraction axiale élastique juste suffisante pour que, si l'on considère le soufflet en demi-coupe axiale, chaque flanc (7, 8) soit au moins approximativement jointif en un point unique (35) de l'autre flanc (8, 7) de la même onde (4) et en un point unique (30) d'un flanc (8, 7) d'une onde (4) respective voisine et que les directions moyennes (33, 34) respectivement de sommet d'onde (9) et de creux d'onde (10) soient mutuellement décalées angulairement, l'une au moins d'entre elles étant oblique par rapport à l'axe (2) du soufflet (1). La relation entre la course axiale du soufflet et sa durée de vie s'en trouve optimisée.

FIG. 2

EP 0 503 983 A1

La présente invention concerne un soufflet de type élastiquement extensible et compressible selon un axe déterminé, comportant une paroi qui est disposée autour de l'axe et qui, lorsqu'elle est vue en coupe par un quelconque demi-plan incluant l'axe, comporte une pluralité d'ondes sensiblement identiques, mutuellement voisines parallèlement à l'axe, dont chacune comporte généralement, c'est-à-dire sauf exceptions localisées notamment en extrémités du soufflet, deux flancs flexibles raccordés mutuellement par un sommet arciforme comparativement rigide, convexe dans le sens d'un éloignement par rapport à l'axe, et raccordés chacun à un flanc d'une onde voisine respective par un creux arciforme comparativement rigide, convexe dans le sens d'un rapprochement par rapport à l'axe, le soufflet étant notamment susceptible d'occuper un état déterminé de contraction axiale élastique juste suffisante pour que chaque flanc soit au moins approximativement jointif d'une part de l'autre flanc de la même onde, en un point déterminé comparativement proche de l'axe, et d'autre part d'un flanc d'une onde voisine respective, en un point déterminé comparativement éloigné de l'axe, en déterminant à proximité de chaque sommet une direction moyenne déterminée de sommet et à proximité immédiate de chaque creux une direction moyenne déterminée de creux.

Des soufflets de ce type sont actuellement connus dans un mode de réalisation caractérisé par une symétrie mutuelle des flancs de chaque onde par rapport à la direction moyenne de sommet correspondante, laquelle est perpendiculaire à l'axe de même que les directions moyennes de creux.

Lorsqu'ils sont métalliques, de tels soufflets connus se prêtent à une fabrication par hydroformage ou formage mécanique, puis mise à longueur par compression axiale dans le domaine des déformations plastiques, c'est-à-dire par des techniques qui, à la fois, se révèlent favorables en termes de prix de revient pour des fabrications en séries moyennes ou grandes, et créent au niveau des sommets et des creux un écrouissage propre à leur communiquer la rigidité requise, permettant de limiter aux flancs les déformations élastiques subies par la paroi lors des extensions et compressions des soufflets.

Dans des applications supposant une différence de pression entre leur intérieur et l'extérieur, comme les applications en régulation, de tels soufflets connus présentent en outre l'avantage d'offrir une surface effective sensiblement constante à cette différence de pression, dans une large gamme de variation de leurs dimensions axiales dans le domaine élastique, ce qui autorise leur application en régulation.

Cependant, ces soufflets connus présentent des performances inférieures, en termes d'amplitude en extensibilité et compressibilité élastiques axiales ou course élastique axiale et en termes de durée de vie, à celles de soufflets présentant le même encombrement au repos mais réalisés par une autre technique, à savoir par empilage de flancs initialement distincts, mutuellement identiques, en forme de coupelle, puis soudure de ces flancs deux à deux alternativement dans des zones périphériques extérieures correspondant aux sommets et dans des zones périphériques intérieures correspondant aux creux. Ces soufflets soudés présentent par contre l'inconvénient d'être beaucoup plus coûteux que les soufflets hydroformés ou formés mécaniquement, en grande série, du fait de la durée nécessairement longue de réalisation des soudures ; en outre, ils présentent l'inconvénient d'offrir aux différences de pression entre leur intérieur et l'extérieur une surface effective essentiellement variable en fonction de leur état d'extension ou de compression axiale, ce qui interdit leur utilisation dans certaines applications et notamment en régulation.

Le but de la présente invention est d'augmenter l'amplitude d'extensibilité et compressibilité élastiques axiales des soufflets du type indiqué en préambule sans porter atteinte à leur durée de vie, et si possible d'améliorer également cette dernière, à encombrement inchangé au repos, cet encombrement étant généralement imposé par les conditions d'utilisation, ou encore de réduire ledit encombrement sans porter atteinte à leurs performances en termes d'amplitude d'extensibilité et compressibilité élastiques axiales et de durée de vie, pour permettre de réduire les dimensions des ensembles auxquels ils doivent s'intégrer.

A cet effet, la présente invention propose un soufflet du type indiqué en préambule, caractérisé en ce que les flancs présentent une forme générale incurvée dans un même sens axial si bien que les directions moyennes respectivement de sommet et de creux sont mutuellement décalées angulairement et qu'au moins l'une des directions moyennes respectivement de sommet et de creux est oblique par rapport à l'axe.

Naturellement, un tel soufflet selon l'invention conserve les avantages des soufflets du type indiqué en préambule, notamment la possibilité d'une réalisation par hydroformage ou formage mécanique puis mise à longueur par compression axiale dans le domaine plastique lorsqu'ils sont métalliques ainsi qu'une surface effective sensiblement constante offerte aux différences de pression dans une large gamme d'amplitude d'extension ou compression élastique axiale.

La forme caractéristique des ondes, et plus précisément des flancs de celle-ci, permet cependant d'améliorer considérablement les caractéristiques de course élastique axiale et de durée de vie du soufflet en permettant d'augmenter le nombre d'ondes pour un encombrement donné, au repos, ou encore de réduire cet encombrement pour un nombre d'ondes donné sans porter atteinte aux caractéristiques de course élastique axiale et de durée de vie, en comparaison avec les soufflets actuellement connus, du type indiqué en préambule.

Le décalage angulaire caractéristique des directions moyennes respectivement de sommet et de creux se traduit par le fait que ces dernières forment entre elles un angle $\alpha$ différent de 0° et de 180° et respectant dans la pratique la relation suivante :

$$45° \leqq \alpha \leqq 180°.$$

La valeur de l'angle $\alpha$ peut par ailleurs être choisie à volonté mais, de préférence, cet angle $\alpha$ respecte la relation suivante :

$$90° \leqq \alpha \leqq 150°.$$

Dans la mesure où au moins l'une des directions moyennes respectivement de sommet et de creux est oblique par rapport à l'axe, l'autre de ces directions moyennes peut rester perpendiculaire à l'axe comme dans les soufflets connus du type indiqué en préambule, mais elle peut également être oblique par rapport à l'axe et, notamment, un mode de mise en oeuvre actuellement préféré de l'invention se caractérise en ce que les directions moyennes respectivement de sommet et de creux présentent des inclinaisons opposées par rapport à l'axe.

Lorsque tel est le cas, l'angle $\alpha$ précité est égal à la somme des angles $\alpha_1$ et $\alpha_2$ que forment avec l'axe respectivement la direction moyenne de sommet et la direction moyenne de creux et, de préférence, ces angles $\alpha_1$ et $\alpha_2$ respectent les relations suivantes :

$$45° \leqq \alpha_1 \leqq 75°$$
$$45° \leqq \alpha_2 \leqq 75°.$$

Naturellement, d'autres valeurs peuvent être choisies pour les angles $\alpha$, $\alpha_1$, $\alpha_2$ sans que l'on sorte pour autant du cadre de la présente invention, bien que les valeurs précitées soient actuellement considérées comme un compromis optimal en termes de course d'extension et compression élastiques axiales du soufflet et de durée de vie de celui-ci, notamment.

Si l'on considère un soufflet selon l'invention dans l'état précité de contraction ou compression axiale élastique juste suffisante pour que, de façon générale, chaque flanc soit au moins approximativement jointif d'une part de l'autre flanc de la même onde, en un point déterminé comparativement proche de l'axe, et d'autre part d'un flanc d'une onde voisine respective, en un point déterminé comparativement éloigné de l'axe, et si l'on désigne respectivement par $d_1$ et $d_2$ les distances séparant, parallèlement à l'axe, deux de ces points comparativement éloignés de l'axe et deux de ces points comparativement proches de l'axe, ces deux distances $d_1$ et $d_2$ sont au moins approximativement égales et respectent les relations suivantes :

$$d_1 \geqq 2(r_1 + e)/ \sin \alpha_1$$
$$d_2 \geqq 2(r_2 + e)/ \sin \alpha_2$$

où $r_1$ désigne le rayon intérieur minimal d'un sommet, $r_2$ le rayon intérieur minimal d'un creux et e l'épaisseur de la paroi tubulaire, c'est-à-dire l'épaisseur d'une couche unique de matériau composant celle-ci ou l'épaisseur totale de plusieurs couches de matériau la composant, suivant les cas.

Lorsque, comme il est admis pour des raisons de tolérances de fabrication ou de choix délibéré, le caractère général mutuellement jointif des deux flancs d'une même onde ou de deux flancs d'ondes voisines n'est qu'approximatif, c'est-à-dire lorsque les deux flancs considérés laissent subsister entre eux, parallèlement à l'axe, un espacement minimal généralement inférieur à l'épaisseur de la paroi tubulaire, on considère :

– en tant que distance $d_1$ la plus grande dimension qu'une onde présente parallèlement à l'axe, mesurée à l'extérieur de cette onde entre deux points qui sont les plus proches des ondes voisines et constituent pour chaque flanc de l'onde considérée un point de contact approximatif avec un flanc d'une onde voisine, c'est-à-dire ledit point respectif le plus éloigné de l'axe, et

– en tant que distance $d_2$ la plus grande dimension qui sépare, parallèlement à l'axe, deux flancs raccordés mutuellement par un creux d'onde, mesurée à l'intérieur des ondes respectivement correspondantes, entre deux points qui, pour chaque flanc considéré, constituent le point le plus proche de l'autre flanc de la même onde, c'est-à-dire un point de contact approximatif avec l'autre flanc de la même onde et ledit point le plus proche de l'axe.

On remarquera que les distances $d_1$ et $d_2$ pourraient également être définies ainsi lorsque le caractère mutuellement jointif des deux flancs d'une même onde et de deux flancs d'ondes voisines est rigoureux.

Dans l'état précité du soufflet, les distances $L_1$ et $L_2$ entre d'une part une ligne moyenne d'ondes, définie comme une ligne parallèle à l'axe et constituant une ligne moyenne entre l'alignement des sommets d'onde et l'alignement des creux d'onde, et d'autre part lesdits points comparativement éloignés de l'axe et lesdits points comparativement proches de l'axe, respectivement, sont liées à la hauteur d'onde H, définie comme la distance séparant les alignements respectifs des sommets d'onde et des creux d'onde, perpendiculairement à l'axe, par les relations suivantes :

$$L_1 \leqq \frac{H}{2} - \frac{(r_1 + e)}{\cos \alpha_1}$$

$$L_2 \leqq \frac{H}{2} - \frac{(r_2 + e)}{\cos \alpha_2}$$

La notion de rayon intérieur minimal d'un sommet ou d'un creux s'entend par référence à une vue de la paroi tubulaire du soufflet en coupe par un quelconque demi-plan incluant l'axe et désigne le rayon minimal, au niveau d'un sommet ou d'un creux respectivement, de celle des faces du soufflet qui est concave au niveau de ce sommet ou de ce creux, respectivement, à savoir la face intérieure du soufflet dans le cas d'un sommet et la face extérieure du soufflet dans le cas d'un creux ; le terme "minimal" évoque la possibilité de s'écarter légèrement, pour les sommets et les creux, d'une forme correspondant rigoureusement à un arc de cercle pour adopter une forme ne correspondant qu'approximativement à un tel arc de cercle ; en raison de la rigidité de la paroi tubulaire du soufflet au niveau des sommets et des creux dans le cas d'un soufflet selon l'invention comme dans les soufflets du type indiqué en préambule, ce rayon minimal $r_1$ ou $r_2$ peut être considéré comme constant dans les conditions normales d'extension ou de compression élastique axiale du soufflet, et peut être défini par exemple par référence à l'état précité, parfaitement déterminé, de contraction axiale élastique juste suffisante pour que chaque flanc soit au moins approximativement jointif en un point respectif d'une part de l'autre flanc de la même onde et d'autre part d'un flanc d'une onde voisine respective, de façon générale.

On remarquera que les relations ci-dessus, définissant $L_1$ et $L_2$, offrent une large gamme de positionnement possible, suivant des directions radiales en référence à l'axe, c'est-à-dire également sur les flancs d'onde, des points de contact au moins approximatif entre deux flancs d'une même onde et entre deux flancs d'ondes respectives voisines par un choix approprié des formes respectives de chaque flanc des ondes, entrant dans le domaine des aptitudes normales d'un Homme du métier dans le but de privilégier certaines caractéristiques du soufflet, en fonction de l'utilisation projetée pour celui-ci.

En particulier, on peut choisir $L_1$ de façon à établir un contact au moins approximatif entre des flancs de deux ondes respectives voisines aussi près que possible des sommets, auquel cas :

$$L_1 = \frac{H}{2} - \frac{(r_1 + e)}{\cos \alpha_1}$$

De même, on peut choisir $L_2$ de telle sorte que :

$$L_2 = \frac{H}{2} - \frac{(r_2 + e)}{\cos \alpha_2}$$

auquel cas le contact entre les deux flancs d'une onde s'établit au niveau des creux d'onde, c'est-à-dire au plus près de l'axe.

Par un choix judicieux des valeurs $L_1$ et $L_2$, on peut ainsi soit réaliser un compromis optimal entre l'amplitude d'extensibilité élastique axiale et de compressibilité élastique axiale du soufflet et sa durée de vie, en situant les points de contact au moins approximatif entre deux flancs d'une même onde et les points de contact au moins approximatif entre deux flancs d'ondes respectives voisines approximativement à une même distance de la ligne moyenne d'ondes, cette distance étant de préférence de l'ordre du quart de la hauteur d'onde ; on peut aussi favoriser une tenue à une surpression extérieure en prévoyant que les points de contact au moins approximatif entre des flancs de deux ondes respectives voisines soient plus éloignés de cette ligne moyenne que les points de contact au moins approximatif entre les flancs d'une même onde, ou au contraire favoriser une bonne tenue en surpression intérieure en prévoyant que les points de contact au moins approximatif entre deux flancs d'une même onde soient plus éloignés de cette ligne moyenne que les points de contact au moins approximatif entre des flancs de deux ondes respectives voisines.

Naturellement, pour une dimension axiale déterminée de soufflet, par exemple au repos ou encore dans l'état déterminé précité de contraction axiale élastique, on peut prévoir d'autant plus d'ondes que les rayons $r_1$ et $r_2$, qui conditionnent les distances $d_1$ et $d_2$, sont petits, ce qui optimise la relation entre la course axiale élastique du soufflet et sa durée de vie ; en outre, dans le cas d'un soufflet métallique réalisé par hydroformage ou formage mécanique puis mise à longueur par compression axiale, de petits rayons $r_1$ et $r_2$ favorisent l'écrouissage des creux et sommets, assurant ainsi leur rigidité permettant de localiser dans les flancs les déformations élastiques que subit la paroi tubulaire du soufflet par des extensions et compressions axiales de celui-ci.

Ainsi, les rayons $r_1$ et $r_2$, qui peuvent être différents ou égaux, présentent de préférence des valeurs inférieures à 3 fois l'épaisseur e de la paroi tubulaire et, lorsque celle-ci est formée d'une seule couche de matériau, sont avantageusement égaux l'un et l'autre à cette épaisseur e ; lorsque la paroi tubulaire est formée d'une superposition d'au moins deux couches, à raison d'au moins une couche d'épaisseur $e_1$ définissant le rayon $r_1$ et d'une couche d'épaisseur $e_2$ définissant le rayon $r_2$, l'épaisseur e de la paroi tubulaire étant alors au moins égale à la somme des épaisseurs $e_1$ et $e_2$ en fonction du nombre de couches dont est constituée cette paroi tubulaire, les rayons $r_1$ et $r_2$ respectent de préférence les relations suivantes :

$$r_1 < 3e_1$$
$$r_2 < 3e_2$$

et, de préférence :

$$r_1 = e_1$$
$$r_2 = e_2.$$

Les dispositions caractéristiques à la présente invention s'appliquent plus particulièrement à des soufflets métalliques, par exemple en acier inoxydable, alliage de nickel (tel qu'inconel ou monel), titane, bronze, alliage de cuivre, ou tout alliage ayant de bonnes caractéristiques de formabilité, mais d'autres matériaux pourraient également être utilisés pour la réalisation de soufflets selon l'invention sans que l'on sorte pour autant du cadre de celle-ci.

L'invention sera mieux comprise si l'on se réfère à la description ci-dessous, relative à un exemple non limitatif de mise en oeuvre, ainsi qu'aux dessins annexés qui font partie intégrante de cette description.

– La figure 1 montre une vue en coupe, par un demi-plan axial, d'un soufflet conforme à la présente invention à l'état de repos, c'est-à-dire dans sa configuration naturelle, en l'absence de toute sollicitation.

– La figure 2 montre une vue de ce soufflet en coupe par le même demi-plan axial, le soufflet occupant toutefois un état de contraction ou compression élastique axiale juste suffisante pour que, lorsqu'ils sont vus selon une telle coupe, les deux flancs de chaque onde soient mutuellement jointifs en un seul point, comparativement proche de l'axe du soufflet, et que chacun d'eux soit jointif du flanc d'une onde respectivement voisine en un point respectif unique, comparativement plus éloigné de l'axe du soufflet ; cet état est généralement défini comme un état dans lequel toutes les ondes, sauf une, sont jointives.

Les figures 3 et 4 montrent, à plus grande échelle, des détails repérés respectivement en III et IV à la figure 1, dans le cas d'une variante de réalisation de la paroi du soufflet.

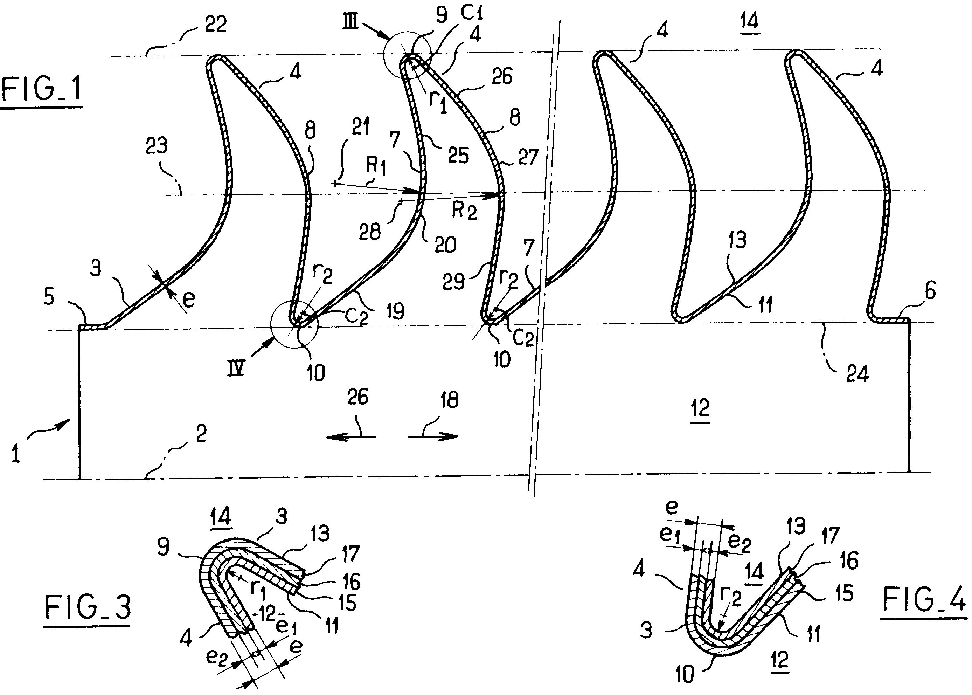

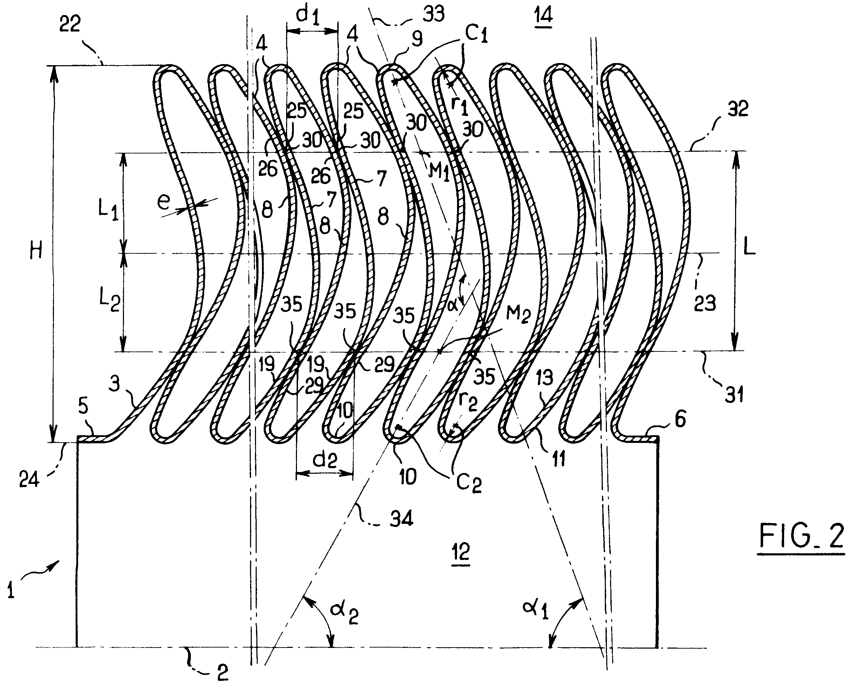

Le soufflet 1 illustré aux figures 1 et 2 présente un axe rectiligne 2 et se compose d'une paroi tubulaire 3 par exemple métallique, entourant coaxialement cet axe 2 et conformée, par exemple par hydroformage ou formage mécanique puis compression axiale dans le domaine plastique, de façon à présenter une pluralité d'ondes 4 mutuellement identiques et mutuellement voisines en direction axiale, entre deux tronçons extrêmes 5 et 6 par exemple cylindriques de révolution autour de l'axe 2, et destinés à permettre le raccordement solidaire du soufflet entre des pièces mobiles axialement l'une par rapport à l'autre et entre lesquelles le soufflet 1 est par exemple destiné à réaliser une étanchéité ; les ondes 4 peuvent présenter des formes respectives annulaires de révolution autour de l'axe 2, lorsque lesdites pièces ne sont destinées à accomplir que des déplacements relatifs axiaux ou encore des mouvements imposant au soufflet 1 un fléchissement ou un décalage latéral mutuel de ses deux tronçons extrêmes 5 et 6, alors qu'elles peuvent être constituées par des spires respectives d'une hélice lorsque ces pièces peuvent être en outre amenées à accomplir des mouvements de rotation relative autour de l'axe 2, comme il est connu d'un Homme du métier.

Chaque onde 4 comporte deux flancs 7, 8 flexibles, dans lesquels se localisent les déformations élastiques de la paroi 3 lors des mouvements d'extension ou compression axiale élastique du soufflet 1. A cet effet, les deux flancs 7, 8 de chaque onde 4 sont raccordés mutuellement, dans le sens d'un éloignement par rapport à l'axe 2, par un sommet d'onde 9 sensiblement rigide dans les conditions normales d'utilisation du soufflet 1, c'est-à-dire dans le domaine des déformations axiales élastiques de celui-ci ; en outre, chacun des flancs 7, 8 d'une onde 4 est relié à un flanc d'une onde 4 voisine respective, à savoir respectivement le flanc 8 de cette zone voisine en ce qui concerne le flanc 7 de l'onde considérée et le flanc 7 de cette onde voisine en ce qui concerne le flanc 8 de l'onde considérée, dans le sens d'un rapprochement par rapport à l'axe 2, par un creux d'onde 10 également rigide dans lesdites conditions normales d'utilisation du soufflet 1.

Une telle rigidité des sommets 9 et creux 10 est avantageusement obtenue par l'écrouissage résultant de l'hydroformage ou du formage mécanique puis de la mise à longueur comme on l'a indiqué plus haut et, dans une vue en coupe par un demi-plan axial comme le montrent les figures 1 et 2, chaque sommet 9 et chaque creux 10 présentent une forme arquée convexe respectivement dans le sens d'un éloignement par rapport à l'axe 2 et dans le sens d'un rapprochement par rapport à celui-ci ; plus précisément, dans une telle vue en coupe, la face 11 de la paroi 3 tournée vers l'intérieur 12 du soufflet 1 présente à l'intérieur de chaque sommet d'onde 9, au moins approximativement, la forme d'un arc de cercle de rayon $r_1$ et de centre $C_1$ alors que la face 13 de la paroi 3 tournée vers l'extérieur 14 du soufflet 1 présente à l'intérieur de chaque creux d'onde 10, au moins approximativement, la forme d'un arc de cercle de rayon $r_2$ et de centre $C_2$, ces formes et ces rayons $r_1$ et $r_2$ se conservant sensiblement quel que soit l'état de contraction ou d'extension axiale élastique du soufflet 1 dans les conditions normales d'utilisation de celui-ci ; lorsque, comme il est admis, les faces 11 et 13 présentent une forme légèrement différente de celle d'un arc de cercle, respectivement à l'intérieur d'un sommet d'onde 9 et à l'intérieur d'un creux d'onde 10, lorsque le soufflet est vu en coupe par un demi-plan axial comme c'est le cas aux figures 1 et 2, on prend en compte à titre de rayon $r_1$ et $r_2$ le rayon minimal de courbure de la face 11 à l'intérieur de chaque sommet d'ondes 9 et le rayon minimal de courbure de la face 13 à l'intérieur de chaque creux d'onde 10, respectivement.

Les rayons $r_1$ et $r_2$ sont choisis de préférence aussi faibles que possible, notamment pour correspondre à un écrouissage des sommets d'onde 9 et creux d'onde 10 lorsque la paroi 3 est métallique et formée par hydroformage ou formage mécanique puis mise à longueur par compression axiale comme on l'a indiqué plus haut. Ainsi, de préférence, il sont inférieurs à trois fois l'épaisseur sensiblement constante e de la paroi 3, et par exemple égaux à cette épaisseur e lorsque, comme il est illustré aux figures 1 et 2, la paroi 3 est formée d'une couche unique de matériau tel qu'un métal ou un alliage métallique ; lorsque, comme le schématisent les figures 3 et 4, la paroi 3 est formée d'une superposition d'au moins deux couches dont les épaisseurs cumulées, sensiblement constantes, définissent son épaisseur e, et par exemple de trois couches 15, 16, 17, le rayon $r_1$ est de préférence inférieur à trois fois l'épaisseur $e_1$ de la couche 15 constituant la face 11 tournée vers l'intérieur 12 du soufflet 1, et par exemple sensiblement égal à cette épaisseur $e_1$, alors que le rayon $r_2$ est de préférence inférieur à trois fois l'épaisseur $e_2$ de la couche 17 constituant la face 13 tournée vers l'extérieur 14 du soufflet, et par exemple sensiblement égal à cette épaisseur $e_2$. Il est entendu que des choix différents ne sortiraient cependant pas du cadre de la présente invention.

Les flancs 7 et 8 de chaque onde 4 peuvent présenter diverses formes également sans que l'on sorte pour autant du cadre de la présente invention, mais, de façon caractéristique, ils présentent une incurvation tournée dans un même sens axial 18, allant dans l'exemple illustré du tronçon extrême 5 vers le tronçon extrême 6, si bien que chaque onde 4 ne présente plus la symétrie par rapport à un plan respectif perpendiculaire à l'axe 2, caractéristique des soufflets de l'Art antérieur du type apte à occuper un état privilégié de compression axiale juste suffisante pour que les deux flancs d'une onde soient en contact mutuel en un point unique comparativement proche de l'axe et en contact avec un flanc d'une onde respective voisine en un point unique comparativement éloigné de l'axe, référence étant faite à une vue du soufflet en coupe par un plan ou demi-plan axial.

A titre d'exemple non limitatif et si l'on se réfère à la vue en coupe de la figure 1, chaque flanc 7 présente à partir de chaque creux d'onde 10, successivement :

– un tronçon approximativement rectiligne 19 se raccordant sans angle vif au creux d'onde 10 et s'éloignant de l'axe 2 dans le sens 18 ;

– un tronçon 20 approximativement en arc de cercle convexe dans le sens 18, se raccordant sans angle vif au tronçon rectiligne 19 et centré en un point 21 situé entre l'alignement 22 des sommets d'onde 9 parallèlement à l'axe 2 et une ligne moyenne d'onde 23, définie comme une ligne parallèle à l'axe 2, située entre l'alignement précité 22 et l'alignement 24 des creux d'onde 10 parallèlement à l'axe 2, la ligne 23 étant équidistante de ces deux alignements 22 et 24 ; les alignements 22 et 24 en sont deux mêmes définis comme étant des tangentes respectivement à la face 13 de la paroi 3 au niveau des sommets d'onde 9 et à la face 11 de la paroi 3 au niveau des creux d'onde 10 ;

– un tronçon approximativement rectiligne 25 se raccordant sans angle vif au tronçon 20 et s'éloignant de l'axe 2 en sens 26 opposé au sens 18 pour se raccorder sans angle vif, dans le sens d'un éloignement par rapport à l'axe 2, au sommet d'onde 9.

Chaque flanc d'onde 8 présente quant à lui successivement, à partir d'un sommet d'onde 9, dans cet exemple non limitatif :

– un tronçon approximativement rectiligne 26 se raccordant sans angle vif au sommet d'onde 9 et se rapprochant de l'axe dans le sens 18 ;

– un tronçon 27 approximativement en arc de cercle convexe dans le sens 18, se raccordant sans angle vif au tronçon 26 et centré en un point 28 situé entre la ligne moyenne 23 et l'alignement 24 ;

– un tronçon approximativement rectiligne 29 se raccordant sans angle vif au tronçon 27 et à un creux d'onde 10, ce tronçon 29 se rapprochant de l'axe 2 en sens 26 opposé au sens 18.

Les rayons $R_1$ et $R_2$, respectivement de la face 13 de la paroi 3 au niveau du tronçon 20 d'un flanc 7, en référence au point 21, et de la face 11 de la paroi 3 au niveau du tronçon 27 d'un flanc 8, en référence au point 28, sont largement supérieurs au rayons $r_1$ et $r_2$.

Cette forme des deux flancs 7 et 8 de chaque onde 4, ou d'autres formes aisément déterminables par un Homme du métier, permet à la paroi 3 du soufflet 1 de se déformer en compression ou extension élastique axiale, sur une grande amplitude utile, en conservant une valeur sensiblement constante à la hauteur d'onde définie comme l'espacement H, radial en référence à l'axe 2, entre les deux alignements 22 et 24, ce qui permet au soufflet 1 d'offrir une section effective également sensiblement constante aux différences de pression pouvant s'exercer entre l'intérieur 12 et l'extérieur 14 du soufflet 1, et permet notamment l'utilisation de celui-ci en régulation ; cependant, d'autres conformations, aboutissant à une variation de cet espacement ou hauteur d'onde H, pourraient être adoptées sans que l'on sorte pour autant du cadre de la présente invention.

Lorsque le soufflet 1 est au repos, comme le montre la figure 1, c'est-à-dire en l'absence de toute sollicitation, ses ondes 4 sont mutuellement disjointes si bien qu'à partir de cet état de repos, il peut subir aussi bien des extensions élastiques axiales que des compressions élastiques axiales.

Par compression élastique axiale, il peut notamment être amené à l'état privilégié illustré à la figure 2, dans lequel, grâce à la conformation décrite des flancs 7 et 8 de chaque onde 4 ou à d'autres configurations choisies par l'Homme du métier à cet effet et si l'on se réfère à une coupe par un demi-plan axial, les deux flancs 7 et 8 de chaque onde 4 sont mutuellement jointifs, par la face 11 de la paroi 3, en un point unique 35 situé entre la ligne moyenne 23 et l'alignement 24 alors que chacun de ces flancs 7, 8 d'une onde 4 est jointif du flanc 8, 7, respectivement, d'une onde 4 respectivement voisine en un point respectif 30 quant à lui situé entre la ligne moyenne 23 et l'alignement 22, les différents points 35 présentant un alignement 31 parallèle à l'axe 2 alors que les points 30 présentent un alignement 32 également parallèle à cet axe 2, perpendiculairement auquel les deux alignements 31 et 32 sont mutuellement distants d'une distance L correspondant à la somme de distances $L_1$ et $L_2$ séparant respectivement, de la ligne moyenne 23, les alignements 32 et 31. On pourrait cependant admettre, de façon non illustrée, que soit les deux flancs 7, 8 de chaque onde 4 ou de certaines ondes 4, soit tout ou partie des flancs 7, 8 d'ondes 4 voisines mutuellement raccordés par un creux d'onde 10, ne soient pas rigoureusement jointifs mais laissent subsister parallèlement à l'axe 2, un espacement minimal généralement inférieur à l'épaisseur de la paroi 3, entre des points respectifs de contact mutuel approximatif, correspondant respectivement aux points 35 alors dédoublés ou aux points 30 alors dédoublés et matérialisant sur chaque flanc 7, 8 respectivement le point de ce flanc le plus proche, parallèlement à l'axe 2 du soufflet, de l'autre flanc de la même onde 4 ou le point de ce flanc le plus proche, parallèlement à l'axe 2 du soufflet, du flanc d'une onde voisine auquel il est raccordé par un creux d'onde 10.

Parallèlement à l'axe 2, deux points 30 voisins et deux points 35 voisins sont espacés de distances identiques, respectivement $d_1$ et $d_2$ qui, comme les distances $L_1$ et $L_2$, varient selon la forme des flancs 7 et 8, laquelle se caractérise en particulier par la direction moyenne 33 que chaque onde 4 présente à proximité immédiate de son sommet 9 et la direction moyenne 34 que définissent deux ondes 4 voisines à proximité immédiate du creux d'onde 10 correspondant, et plus précisément par des angles $\alpha_1$ et $\alpha_2$ que ces directions moyennes 33 et 34 forment respectivement par rapport à l'axe 2, compte tenu de leur orientation par rapport à celui-ci, référence étant faite à la figure 2 et à l'état de compression axiale du soufflet 1 illustré à cette figure. On définit la direction moyenne 33 d'un sommet d'onde 9 comme une direction passant par le centre $C_1$ correspondant et par le point milieu $M_1$ entre les deux points 30 correspondant aux deux flancs 7, 8 de la même onde 4 et la direction moyenne 34 d'un creux d'onde 10 comme une direction passant par le centre $C_2$ correspondant et par le point milieu $M_2$ entre les deux points 35 correspondant aux deux flancs 7, 8 raccordés mutuellement par ce creux d'onde 10.

La forme choisie pour les flancs 7 et 8 dans l'exemple illustré aboutit à donner aux directions moyennes 33 et 34 des inclinaisons opposées par rapport à l'axe 2, étant entendu que d'autres formes des flancs 7 et 8 propres à aboutir à un décalage angulaire mutuel de ces directions 33 et 34 dans l'état privilégié de compression axiale correspondant à l'état illustré à la figure 2 pourraient être choisies sans que l'on sorte pour autant du cadre de la présente invention, ce que l'on peut exprimer par le fait que les directions moyennes 33 et 34 forment entre elles un angle $\alpha$ supérieur ou égal à 45° et inférieur à 180° dans un état de compression axiale du soufflet correspondant à l'état illustré à la figure 2.

De préférence, cet angle $\alpha$ est compris entre 90° et 150°, ou égal à l'une ou l'autre de ces valeurs, bien que d'autres choix ne sortent pas du cadre de la présente invention.

Dans l'exemple illustré, l'angle $\alpha$ est égal à la somme des angles $\alpha_1$ et $\alpha_2$, l'un et l'autre inférieurs à 90° et supérieurs à 0°, et chacun de ces angles $\alpha_1$ et $\alpha_2$ est de préférence compris entre 45° et 75°, ou égal à l'une ou l'autre de ces valeurs, étant entendu que d'autres choix ne sortiraient pas du cadre de la présente invention ; en particulier, l'un des angles $\alpha_1$ et $\alpha_2$ pourrait être égal à 90°, l'autre de ces angles étant alors quant à lui différent de 90° afin de correspondre à un décalage angulaire des directions moyennes 33 et 34.

On démontre aisément que pour des valeurs déterminées de e, $r_1$, $r_2$, $\alpha_1$ et $\alpha_2$, les distances $d_1$ et $d_2$, égales entre elles dans l'exemple illustré dans lequel les flancs 7, 8 d'une même onde 4 sont rigoureusement jointifs de même que ceux des flancs 7, 8 de deux ondes 4 voisines qui sont raccordés entre eux par un creux d'onde 10, et les distances $L_1$ et $L_2$ respectent les relations suivantes :

$$d_1 \geq 2 \, (r_1 \, + \, e)/ \sin \alpha_1$$
$$d_2 \geq 2 \, (r_2 \, + \, e)/ \sin \alpha_2.$$
$$L_1 \leq \frac{H}{2} - \frac{(r_1 \, + \, e)}{\cos \alpha_1}$$
$$L_2 \leq \frac{H}{2} - \frac{(r_2 \, + \, e)}{\cos \alpha_2}$$

Si $d_1$ est égal à $2 \, (r_1 + e)/ \sin \alpha_1$ et si $L_1$ est égale à

$$\frac{H}{2} - \frac{(r_1 \, + \, e)}{\cos \alpha_1},$$

de façon non illustrée, des flancs 7, 8 d'ondes 4 respectives voisines sont de façon générale, c'est-à-dire si l'on excepte les flancs 7 et 8 jouxtant les tronçons extrêmes 5 et 6, en contact mutuel par des points 30 localisés au niveau des sommets d'onde 9 ; de même, si $d_2$ est égal à $2 \, (r_2 + e)/ \sin \alpha_2$, et si $L_2$ est égale à

$$\frac{H}{2} - \frac{(r_2 \, + \, e)}{\cos \alpha_2},$$

le contact entre les deux flancs 7 et 8 d'une onde 4 s'établit, de façon non illustrée, en un point 35 localisé au niveau des creux d'onde 10 correspondants.

En dehors de ces conditions, les points 30 sont situés au niveau des tronçons 25 et 26, alors déformés, des flancs 7 et 8 respectivement alors que les points 35 sont situés au niveau des tronçons 19 et 29, également alors déformés, des flancs 7 et 8 respectivement.

Lorsque, de façon non illustrée, le contact entre les flancs d'une même onde ou entre deux flancs d'onde voisins n'est qu'approximatif, les distances $d_1$ et $d_2$ peuvent n'être qu'approximativement égales mais elles respectent néanmoins les relations ci-dessus, la distance $d_1$ étant définie comme la distance séparant parallèlement à l'axe les deux points de contact au moins approximatif des flancs de cette onde avec les flancs d'onde voisins et la distance $d_2$ comme la distance séparant parallèlement à l'axe les deux points de contact au moins approximatif de deux flancs appartenant à deux ondes voisines, raccordés mutuellement par un creux d'onde 10, avec l'autre flanc de l'onde respectivement correspondante.

Les distances $d_1$ et $d_2$ correspondent ainsi respectivement à la plus grande dimension qu'une onde 4 présente parallèlement à l'axe 2 au niveau de ses flancs 7 et 8 et à la plus grande dimension qui sépare, parallèlement à l'axe 2, ceux des flancs 7, 8 de deux ondes 4 voisines qui sont raccordés entre eux par un creux d'onde 10.

Les distances $L_1$ et $L_2$ respectent alors également les relations ci-dessus.

Des essais ont démontré qu'en faisant varier les distances $L_1$ et $L_2$, par un choix approprié de la forme des flancs d'onde 7 et 8, on pouvait influer sur le comportement du soufflet 1 à l'utilisation.

Ainsi, les essais ont démontré que le choix pour $L_1$ et $L_2$ de valeurs identiques, égales approximativement au quart de la hauteur d'onde H, permettait d'optimiser la relation entre la durée de vie du soufflet et la course axiale élastique admissible pour celui-ci dans des conditions normales d'utilisation, c'est-à-dire la différence entre ses dimensions axiales respectivement en extension axiale maximale et en compression axiale maximale dans ces conditions normales d'utilisation ; les essais ont par ailleurs révélé que le choix pour $L_1$ d'une valeur supérieure à celle de $L_2$ permettait de favoriser la tenue du soufflet 1 à une surpression extérieure alors que le choix pour $L_1$ d'une valeur inférieure à celle de $L_2$ permettait de favoriser la tenue du soufflet 1 à une surpression intérieure, pour une même valeur de la somme L de ces deux distances $L_1$ et $L_2$.

A titre également indicatif, les essais réalisés sur des soufflets métalliques du type illustré aux figures 1 et 2 ont révélés, en comparaison avec des soufflets de type standard du type indiqué en préambule et de même encombrement, une course axiale élastique supérieure de 50%, le rapport entre les dimensions axiales du soufflet respectivement en extension maximale et en compression maximale dans les conditions normales d'utilisation se situant entre 2 et 4,5, une raideur réduite de 25% et une résistance aux différences de pression entre l'intérieur et l'extérieur accrue de 30%. Ces chiffres, quine constituent que des exemples non limitatifs, ont été obtenus à la suite d'essais pratiqués sur des soufflets réalisés par hydroformage de tubes monocouches en divers alliages métalliques présentant des taux d'allongement supérieurs à 50%, avec des épaisseurs e comprises entre 5/100 de mm et 0,3 mm, étant entendu que des épaisseurs différentes et notamment supérieures, pouvant atteindre par exemple 4 mm, ainsi que des taux d'allongement différents peuvent cependant être choisis en fonction notamment des dimensions radiales du soufflet et des conditions d'utilisation de celui-ci.

De façon générale, le mode de mise en oeuvre de l'invention qui vient d'être décrit ne constitue qu'un exemple non limitatif, par rapport auquel on pourra prévoir de nombreuses variantes sans sortir pour autant du cadre de la présente invention.

## Revendications

1. Soufflet de type élastiquement extensible et compressible selon un axe déterminé (2), comportant une paroi (3) qui est disposée autour de l'axe (2) et qui, lorsqu'elle est vue en coupe par un quelconque demi-plan incluant l'axe, comporte une pluralité d'ondes (4) sensiblement identiques, mutuellement voisines parallèlement à l'axe (2), dont chacune comporte généralement deux flancs flexibles (7, 8) raccordés mutuellement par un sommet (9) arciforme comparativement rigide, convexe dans le sens d'un éloignement par rapport à l'axe (2), et raccordés chacun à un flanc (8, 7) d'une onde (4) voisine respective par un creux (10) arciforme comparativement rigide, convexe dans le sens d'un rapprochement par rapport à l'axe (2), le soufflet (1) étant notamment susceptible d'occuper un état déterminé de contraction axiale élastique juste suffisante pour que chaque flanc (7, 8) soit au moins approximativement jointif d'une part de l'autre flanc (8, 7) de la même onde (4), en un point déterminé (35) comparativement proche de l'axe (2), et d'autre part d'un flanc (8, 7) d'une onde (4) voisine respective, en un point déterminé (30) comparativement éloigné de l'axe (2), en déterminant à proximité de chaque sommet (9) une direction moyenne déterminée (33) de sommet et à proximité immédiate de chaque creux (10), une direction moyenne déterminée (34) de creux,

   caractérisé en ce que les flancs (7, 8) présentent une forme générale incurvée dans un même sens axial (18) si bien que les directions moyennes (33, 34) respectivement de sommet et de creux sont mutuellement décalées angulairement et qu'au moins l'une des directions moyennes (33, 34) respectivement de sommet et de creux est oblique par rapport à l'axe ( 2).

2. Soufflet selon la revendication 1, caractérisé en ce que :
$$90° \leqq \alpha \leqq 150°$$
où $\alpha$ : angle que forment entre elles les directions moyennes (33, 34) respectivement de sommet et de creux.

3. Soufflet selon l'une quelconque des revendications 1 et 2, caractérisé en ce que les directions moyennes (33, 34) respectivement de sommet et de creux présentent des inclinaisons opposées par rapport à l'axe.

4. Soufflet selon les revendications 2 et 3 en combinaison, caractérisé en ce que :

$$\alpha = \alpha_1 + \alpha_2$$
$$45° \leqq \alpha_1 \leqq 75°$$
$$45° \leqq \alpha_2 \leqq 75°$$

où $\alpha_1$ = angle que forme avec l'axe (2) la direction moyenne (33) de sommet,

$\alpha_2$ = angle que forme avec l'axe (2) la direction moyenne (34) de creux.

5. Soufflet selon l'une quelconque des revendications 1 à 4, caractérisé en ce que :

$$d_1 \geqq 2(r_1 + e)/ \sin \alpha_1$$
$$d_2 \geqq 2(r_2 + e)/ \sin \alpha_2$$
$$d_1 \simeq d_2$$

où $d_1$ = distance séparant, parallèlement à l'axe (2), deux desdits points (30) comparativement éloignés de l'axe (2) ;

$d_2$ = distance séparant, parallèlement à l'axe, deux desdits points (35) comparativement proches de l'axe (2) ;

$r_1$ = rayon intérieur minimal d'un sommet (9) ;

$r_2$ = rayon intérieur minimal d'un creux (10) ;

e = épaisseur de la paroi tubulaire (3).

6. Soufflet selon l'une quelconque des revendications 1 à 5, caractérisé en ce que :

$$L_1 \leqq \frac{H}{2} - \frac{(r_1 + e)}{\cos \alpha_1}$$

$$L_2 \leqq \frac{H}{2} - \frac{(r_2 + e)}{\cos \alpha_2}$$

où $L_1$ = distance entre les points (30) comparativement éloignés de l'axe (2) et une ligne moyenne d'onde (23), parallèle à l'axe (2) ;

$r_1$ = rayon inférieur minimal d'un sommet (9) ;

$r_2$ = rayon intérieur minimal d'un creux (10) ;

$L_2$ = distance entre les points (35) comparativement proches de l'axe (2) et la ligne moyenne d'onde (23) ;

e = épaisseur de la paroi tubulaire (3) ;

H = hauteur d'onde, perpendiculaire à l'axe (2).

7. Soufflet selon l'une quelconque des revendications 1 à 6, caractérisé en ce que :

$$r_1 > 3e$$
$$r_2 > 3e$$

où $r_1$ = rayon intérieur minimal d'un sommet (9) ;

$r_2$ = rayon intérieur minimal d'un creux (10) ;

e = épaisseur de la paroi tubulaire (3).

8. Soufflet selon la revendication 7, caractérisé en ce que la paroi tubulaire (3) est formée d'une seule couche et en ce que :

$$r_1 = r_2 = e.$$

9. Soufflet selon la revendication 7, caractérisé en ce que la paroi tubulaire (3) est formée d'une superposition d'au moins deux couches (15, 16, 17) et en ce que :

$$e_1 + e_2 \leqq e$$
$$r_1 < 3e_1$$
$$r_1 < 3e_2$$

où $e_1$ = épaisseur de la couche (15) définissant le rayon $r_1$

$e_2$ = épaisseur de la couche (17) définissant le rayon $r_2$.

10. Soufflet selon la revendication 9, caractérisé en ce que :

$$r_1 = e_1$$
$$r_2 = e_2.$$

11. Soufflet selon l'une quelconque des revendications 1 à 10, caractérisé en ce que la paroi tubulaire (3) est métallique.

FIG_1

FIG_3

FIG_4

FIG. 2

**Office européen des brevets**

# RAPPORT DE RECHERCHE EUROPEENNE

Numero de la demande

EP 92 40 0116

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 469 502 (GARDNER) * colonne 6, ligne 49 - colonne 7, ligne 28; figures 5,6 * --- | 1-4 | F 16 J 3/04 |
| Y | EP-A-0 312 184 (BW/IP INTERNATIONAL) * colonne 3, ligne 9 - page 3, ligne 13; figure 2 * --- | 1-4 | |
| A | US-A-2 811 173 (BENSON) --- | | |
| A | GB-A- 730 858 (PETERS) ----- | | |

**DOMAINES TECHNIQUES RECHERCHES (Int. Cl.5)**

F 16 J

Le présent rapport a été établi pour toutes les revendications

| Lieu de la recherche | Date d'achèvement de la recherche | Examinateur |
|---|---|---|
| BERLIN | 24-04-1992 | THOMAS C L |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)